# EUROPEAN PATENT SPECIFICATION

(11) **EP 2 264 860 B1**
(45) Date of publication and mention of the grant of the patent: **25.10.2017**
(21) Application number: 09163056.6
(22) Date of filing: 18.06.2009
(51) Int. Cl.: H02K 1/27, H02K 1/04

(54) **A rotor for a track-bound vehicle electric machine, such a machine and a track-bound vehicle having such a machine**
Läufer einer elektrischen Maschine für ein Schienenfahrzeug, eine solche Maschine und ein Schienenfahrzeug mit einer solchen Maschine
Roteur pour machine électrique d'un véhicule sur rails, une telle machine et véhicule sur rails ayant une telle machine

(43) Date of publication of application: 22.12.2010
(73) Proprietor: Bombardier Transportation GmbH, 10785 Berlin (DE)
(72) Inventor: Björklund, Anders, 722 15 Västerås (SE); Brammer, Ronald, 722 31 Västerås (SE)
(74) Representative: Olsson, Jan

(56) References cited:
- WO-A-2006/090567
- DE-A1- 10 020 946
- DE-A1-102006 011 729
- DE-A1-102006 061 372
- US-A1- 2004 046 469
- US-B1- 6 359 359

## Description

### TECHNICAL FIELD OF THE INVENTION AND BACKGROUND ART

The present invention relates to a rotor for a track-bound vehicle electric machine configured to generate a traction force of a said vehicle according to the preamble of appended claim 1, as well as a track-bound vehicle electric machine comprising a stator and such a rotor.

The invention relates to a rotor for electric machines which may operate as motor and/or generator.

An electric machine provided with such a rotor is by the use of a plurality of permanent magnets to produce the magnetic flux of the rotor in motor operation a synchronous motor called permanent magnet synchronous motor. Such a motor has lower rotor losses compared to an induction motor and thus higher efficiency. It can also be built with a higher pole number, compared to an induction motor, without sacrificing performance, so that it can have a higher torque capability, features making such an electric machine particularly interesting as a track-bound vehicle electric machine for which a high torque capability with respect to a determined size of the motor is an important feature.

By using such a laminated assembly to build the rotor body the efficiency of the machine is increased thanks to a considerable reduction of eddy current losses in the rotor body compared to a cast rotor body.

It is an ongoing attempt to reduce the losses of a said track-bound vehicle electric machine so as to improve the efficiency thereof and by that increase the torque capability with respect to a determined size of such a machine, and the present invention is directed to obtaining this by reducing the losses associated with the rotor.

A rotor for a track-bound vehicle electric machine according to above is known through US 2004/046469 A1. By arranging the permanent magnet in each slot of the rotor not as one single bar magnet, but as a package of a plurality of magnets arranged side by side, considerably lower losses are achieved than should a single permanent magnet of the same size as said package be used. It is crucial to electrically insulate said permanent magnets arranged side by side with respect to each other for obtaining this and to survive the thermal, electrical and mechanical ageing stresses that will be present in service. It is also of great importance that the outer surfaces of the permanent magnet package is electrically insulated with respect to portions of the rotor body place defining the respective slot, since the permanent magnets may otherwise establish a metallic contact between adjacent plates of the rotor body resulting in increased losses. Furthermore, the layers of electrically insulating material should be as thin as possible while still obtaining reliable electrical insulation of the respective side of said package extending in parallel with said one layer for a maximum magnetic field created by the permanent magnets, whereas the value of the thickness of the layers of electrically insulated material separating the permanent magnets and the package with respect to the rotor body plate and extending substantially perpendicularly to said one layer is of less importance as long as reliable electrical insulation is obtained.

The electrical insulation of adjacent magnets is in the rotor of US 2004/046469 A1 obtained by laminating and securing the pieces of magnet through an insulating film between pieces of magnets. Thus, the insulating film is used to secure the pieces of magnet to each other, and it is mentioned that this securing may be combined with a fibre strip wound around the stack of pieces of magnet and thermally fusing joint parts of the fibre strip. It is also mentioned that the whole laminated body may be secured by coating the whole surface thereof with a thermal setting resin or the like using the known injection moulding technique to form the integrated magnet body. It is stated that various kinds of organic resins can be selected to obtain the organic insulating film. Forming the integrated magnet bodies in this way by insulating films between the pieces of magnet and insulating material therearound in the form of thermally fused fibre strip, a thermal setting resin or the like means that care has to be taken that integrated magnet bodies fitting as desired into said slots of a rotor are produced. It may otherwise be difficult to introduce the integrated magnet bodies into the slots or they will not fit tightly enough in the slots and by that not be kept accurately in place.

### SUMMARY OF THE INVENTION

The object of the present invention is to provide a rotor of the type defined in the preamble of appended claim 1 which is at least in some aspect improved with respect to such rotors already known.
This object is according to the invention obtained by providing the rotor with layers of electrically insulating material separate from said permanent magnets in the form of sheets arranged between adjacent permanent magnets of a said package and between these permanent magnets and said portions of the rotor body plates defining the respective slot, in which the rotor comprises at least one said sheet of electrically insulating material separate from said permanent magnets arranged in a said slot between said permanent magnet package and said portions of the rotor body plates and defining the respective slot while forming a tube-like electrically insulating structure receiving said permanent magnet package. By having such sheets of electrically insulating material separate from the permanent magnet it is possible to insert the sheets into the respective slot before the introduction of the permanent magnets thereinto, in which these sheets may be given properties, such as mechanical strength, flexibility and slippery surfaces, facilitating the introduction of the permanent magnets thereinto. Furthermore, by forming a said tube-like electrically insulating structure of such a sheet defining the respective slot this structure may be inserted into the slot before the magnets or together with the magnets while being wrapped therearound. Each of these two alternatives may facilitate the introduction of the magnets into the slot, and which one is chosen may be dependent upon the circumstances. The utilization of such sheets separate from the permanent magnets for obtaining electrical insulation of the permanent magnets with respect to each other and of the permanent magnet package with respect to the rotor body plates results in a better possibility to adapt the size of such a package with structure for electrical insulation to the actual dimensions of a said slot for obtaining a snug fit of the package in the slot.

Said layers of electrically insulating material may in a rotor according to the present invention be introduced into said slots before the permanent magnets are inserted thereinto or all these layers may be applied to the surfaces of the permanent magnets before these are inserted into the slots. Combinations of these two methods of introducing permanent magnets and said layers of electrically insulating material into said slots when manufacturing a said rotor are possible, so that for instance permanent magnets arranged side by side may be insulated with respect to each other by being secured to each other as said package or a part of said package before introduction into a said slot, which has prior to said introduction been provided with layers of electrically insulating material covering the portions of the rotor body plates defining the slot.

According to an embodiment of the invention the rotor comprises said permanent magnets packages having ≥ 2, especially ≥ 4, permanent magnets arranged side by side in the transversal direction of the respective slot, and according to another embodiment of the invention said permanent magnets packages have 2-16, especially 4-10, permanent magnets arranged side by side in the longitudinal direction of the respective slot, which results in a considerable reduction of losses in the form of heat dissipation as a consequence of eddy current generation in the magnets with respect to the case of one single bar magnet arranged in said slot. The actual number of magnets arranged in each said slot depends on the specific rotor design and production parameters.

According to another embodiment of the invention said layers of electrically insulating material comprise a material having a heat resistance so as to obtain a long term electrical insulation of adjacent permanent magnets in a said package and of said permanent magnets with respect to the rotor plates for an operation temperature of said permanent magnets and rotor up to at least 200°C. By selecting a material for said electrical insulation with such a heat resistance it is ensured that the electrical insulation will be maintained over years of operation of a track-bound vehicle electric machine having such a rotor, since temperatures of 180°C, but seldom above 200°C, may often occur during such operation.

According to another embodiment of the invention said layers of electrically insulating material are attached to said permanent magnets. It is then suitable that these layers have been attached to the permanent magnets before insertion thereof into said slots, and said layers are then preferably attached to said permanent magnets by adhesives, such as adhesive tapes, cyan-acrylate glues or epoxies. These layers are then preferably made of woven fibre glass, polymer films, such as polyester and polyimide, glass reinforced polymer adhesive tapes, paper materials, such as polyaromatic polyamide or polyester non-woven materials, or non-organic materials, or combinations of these materials. Such an attachment of said layers of electrically insulating material to the permanent magnets may in some cases facilitate the insertion of the permanent magnets into said slot.

According to another embodiment of the invention the rotor comprises permanent magnets packages having permanent magnets arranged side by side in the transversal direction of the slot attached to each other as one rigid piece, which will facilitate the introduction of the permanent magnets into a said slot, when this rigid piece is created before insertion of the permanent magnets into the slot.

According to another embodiment of the invention the rotor comprises permanent magnets packages having at least one said piece also including permanent magnets arranged side by side in the longitudinal direction of the slot, which may under certain circumstances further simplify the introduction of said permanent magnets in a said slot.

According to another embodiment of the invention said slots are provided with grooves extending in the longitudinal direction of the slot in opposite walls of the slot each receiving a said sheet in the form of a rigid strip separating permanent magnets of said package arranged side by side in the transversal direction of the slot. Such strips may be used for guiding permanent magnets when inserting these into a said slot, and these magnets may then be coated by an electrically insulating material, so that said strips have mainly the function of facilitating the introduction of said magnets into the slots.

According to another embodiment of the invention said sheets of electrically insulating material are made of flexible films of polyester, polyimide or other polymer, flexible papers of polyaromatic polyamide, flexible composite materials, such as laminations of the previous two material types, such as polyester-film/polyaromatic polyamide-paper laminate, or woven glass fabric coated with fluoropolymers. Such material used for said sheets are preferred when the sheets are introduced into a rotor slot before the magnets, since the sheets may then be given the properties desired for this, such as mechanical strength, flexibility, low friction with respect to the magnets and low tendency to form wrinkles.

According to another embodiment of the invention said sheets are substantially rigid, such as in the form of polymer-reinforced fibre glass laminate. Such sheets are preferred in a rotor for a track-bound vehicle electric machine, since thin layers of polymer, such as polyester having glass fibres therebetween, may form slippery surfaces promoting the movement of magnets during insertion thereof into said slots, and the glass fibres will ensure a long term insulation of adjacent magnets with respect to each other by maintaining a distance between these magnets, although the polymer layers of the laminate may thermally decompose at the highest operation temperatures of a said rotor.

According to another embodiment of the invention at least said layers of electrically insulating material separating the outer surfaces of said permanent magnets package with respect to portions of said rotor body plates defining the respective slot are made of a material with mechanical resistance to abrasion, so that the risk of a degraded electric insulation resulting from the introduction of said permanent magnets into a said slot may be avoided.

According to another embodiment of the invention said layers of electrically insulating material separating said outer surfaces of a said permanent magnets package with respect to portions of said rotor body plates defining the respective slot are made of a slippery, low friction material, such as glass fabric coated with fluoropolymers.

The invention also relates to a track-bound vehicle electric machine comprising a stator and a rotor according to the present invention as well as a track-bound vehicle having a driving arrangement for generating a traction force of the vehicle including at least one electric machine having a stator and a rotor according to the present invention. The advantageous features and the advantages of such an electric machine and such a vehicle appear clearly from the above discussion of the different embodiments of a rotor according to the present invention.

Further advantages as well as advantageous features of the invention will appear from the following description.

### BRIEF DESCRIPTION OF THE DRAWINGS

With reference to the appended drawings, below follows a specific description of embodiments of the invention cited as examples.

In the drawings:
- Fig 1: is a very schematic side elevation view illustrating an electric machine having a stator and a rotor according to an embodiment of the present invention,
- Fig 2: is a simplified perspective view illustrating a permanent magnet package being a part of a rotor according to an embodiment of the invention,
- Fig 3: is a simplified perspective view illustrating how a part of a permanent magnet package may be introduced into a slot in a rotor according to an embodiment of the present invention,
- Fig 4: is a view illustrating the cross-section of a slot for permanent magnets in a rotor according to an embodiment of the invention,
- Fig 5: is a perspective view illustrating how strips of electrically insulating material are introduced between magnets, either directly or by utilizing a system with grooves as in a slot shown in Fig 4 and permanent magnets are introduced into the slot, and
- Fig 6: is a very simplified cross-section view illustrating how insulating material in the form of a polymer-reinforced fibre glass laminate or glass reinforced polymer adhesive tape may be used to form an electrical insulation of adjacent permanent magnets with respect to each other or magnets with respect to slot surface.

### DETAILED DESCRIPTION OF EMBODIMENTS OF THE INVENTION

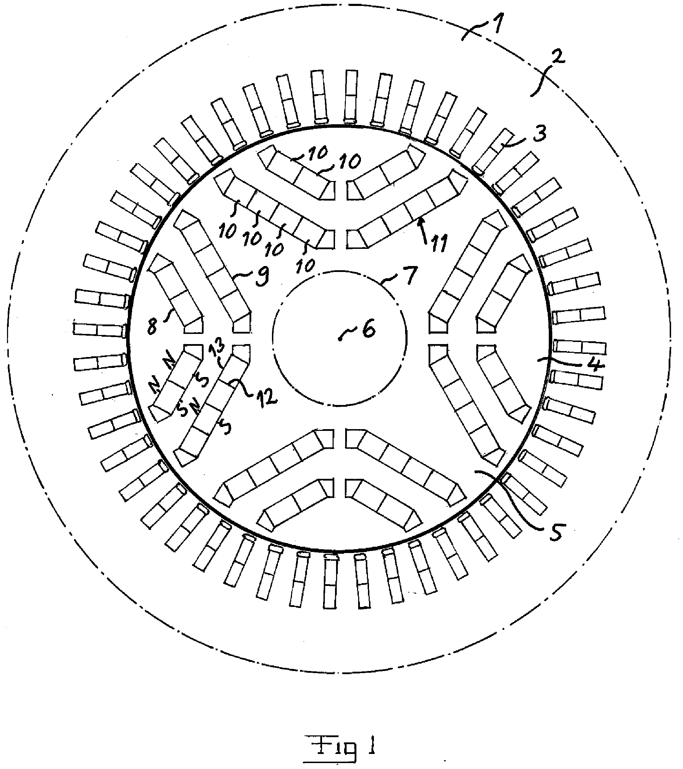

Fig 1 shows schematically in an axial end view some of the main parts of a track-bound vehicle electric machine having a rotor according to the present invention. This electric machine has a stator 1 with a stator body 2 with a stator winding (not shown) wound therearound and configured to electrically create a plurality of stator poles disposed around the inner periphery of the stator body. Said stator winding is received in radial slots 3 in the stator body, extending over the entire length of this body. 48 slots are in this way uniformly distributed around the inner periphery of the stator body 2, so that 12 said slots belong to one stator pole in the case of a four-pole electric machine as in the embodiment shown in Fig 1. The total number of slots and number of slots per pole may of course be any other conceivable.

The electric machine further comprises a rotor 4 with a rotor body 5, which as the stator body is made of a laminated assembly of mutually electrically insulated annular plates of magnetic steel axially stacked with respect to an axis of rotation 6 of the rotor for keeping eddy current losses in these bodies at low levels. The rotor body 5 is rigidly connected with respect to rotation to a rotor axle 7, which is to be connected to the wheel axle of a vehicle, possibly through a gear box.

The rotor body 5 comprises a plurality of longitudinal slots 8, 9 extending in parallel with said axis of rotation 6 of the rotor body. It is shown in Fig 1 how four such slots are arranged per pole of the rotor, two 8 with a smaller cross-section and two 9 with a larger cross-section. The slots 9 have in the present case, which is an illustrative example of one possibility of many, a rectangular cross-section of approximately 10 x 55 mm and a length of approximately 300 mm. Permanent magnets 10, here with a cross-section of 10 x 13 mm and a length of 37 mm, are arranged in each said slot in the form of a package of permanent magnets arranged in one layer, in one plane, side by side in the transversal and longitudinal direction of the slot with permanent magnets arranged in the same slot having the same magnetic polarity direction being substantially perpendicular to said one layer formed by said package, and the sides of the north N and south S poles of these magnets are indicated for two slots 8, 9 in Fig 1. Eight permanent magnets are arranged in an end to end relationship in the longitudinal direction in each such permanent magnets package, and two permanent magnets are arranged side by side in the transversal direction of a slot 8 and four in that direction of a slot 9.

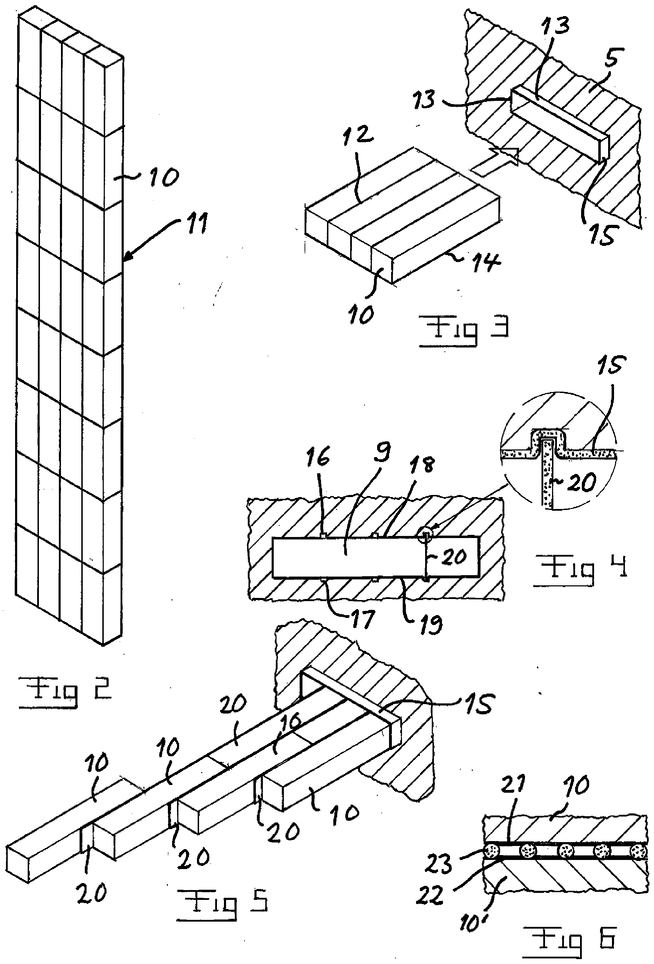

Fig 2 illustrates the appearance of a said permanent magnets package 11 arranged in a slot 9 with a larger cross-section. Suitable materials for the permanent magnets are for instance NeFeB and SmCo.

Layers 12, 13 of electrically insulating material separate on one hand said permanent magnets of each said package with respect to each other (layers 12) and on the other outer surfaces of said permanent magnets package with respect to portions of said rotor body plates defining the respective slot (layers 13). The layers 12 are arranged for reducing the losses by dividing the "bar magnets" into several smaller magnets, and the thickness of these layers is not crucial as long as they reliably insulate the magnets with respect to each other and may well be in the order of 1 mm, whereas the thickness of the layers 13 arranged on the magnetic pole sides of the magnets has to be as thin as possible while ensuring proper electrical insulation for obtaining a maximum magnetic field generated thereby and may then have a double-sided thickness of less than 0.5 mm, here about 0.2 mm.

A permanent magnet package of the rotor as shown in Fig 2 may have all the permanent magnets attached to each other as one rigid piece by the use of an adhesive combined with or having itself the feature of a material with electrically insulating properties therebetween, but it also conceivable to have only some or none of the magnets of the package attached to each other. It is for instance possible to have only the permanent magnets arranged side by side in the transversal direction of the slot attached to each other as one rigid piece 14 as shown in Fig 3. A tube 15 of electrically insulating material is here formed by cutting a flexible such material to desired dimensions and then roll it to such a tube, which has been inserted into a slot 9. The material of said tube 15 is then preferably mechanically strong and has "slippery" surfaces to promote the movement of the piece 14 of magnets during insertion. Several such pieces 14 of four magnets attached to each other and mutually separated by an electrically insulating layer 12 may then be successively inserted into the tube 15 and moved into the desired position in the slot 9. Non-magnetic tools with the approximate cross-section of the slot, a length greater than the rotor length are inserted into the slot from the opposite end and are used to provide reverse pressure on the magnets and to provide an indication of how far into the slot the magnets are inserted. End plates not shown may then be applied to both sides of the rotor body for keeping the magnets in place inside the rotor body.

Fig 4 illustrates a possible cross-section of a said slot 9 according to another embodiment of the invention, in which the slot 9 is provided with grooves 16, 17 extending in the longitudinal direction of the slot in opposite walls 18, 19 of the slot each receiving a sheet 20 of electrically insulating material in the form of a rigid strip separating permanent magnets of said package arranged side by side in the transversal direction of the slot. Such sheets may be there primarily for guiding the permanent magnets when introduced into the slot 9 and these magnets may be externally coated by a layer of electrically insulating material for obtaining the electrical insulation of adjacent magnets with respect to each other. It is shown in Fig 5 how such permanent magnets 10 may be individually introduced into the slot 9 while being received in a said tube 15 and guided by such sheets 20 to form a permanent magnets package once introduced into the rotor slot 9. The sheets 20 may either be received in grooves as shown in Fig 4 or be simply arranged between magnets without any such grooves.

Fig 6 illustrates schematically a preferred material for being used as an electrically insulating layer, here between two magnets 10, 10'. This material may be used as a said strip 20 and is a polymer-reinforced fibre glass laminate or glass reinforced polymer adhesive tape having two films 21, 22 of a polyester and glass fibres 23 sandwiched therebetween. The strip 20 may also have only one said film 21, 22. The polyester layer has a low friction with respect to the magnets when inserted into the slot as shown in Fig 5, but this material may not withstand the high temperatures that may occur during operation of an electric machine for which the rotor is intended. However, the glass fibres 23 function as spacers and ensures proper electrical insulation of the permanent magnets 10, 10' also after thermal decomposition of the layers 21 and 22. Furthermore, the glass fibres make the strips sufficiently rigid for the guidance of the magnets when introduced into the slots without forming wrinkles.

The invention is of course not in any way restricted to the embodiments described above, but many possibilities to modifications thereof will be apparent to a person with ordinary skill in the art without departing from the scope of the invention as defined in the appended claims.

Two or more magnets may side by side in the transversal direction of a said slot be secured to each other while forming a rigid piece and several such pieces be arranged side by side in said transversal direction while being separated by one or more strips of the type shown in Fig 4 and 5.

## Claims

1. A rotor for a track-bound vehicle electric machine configured to generate a traction force of a said vehicle, said rotor comprising:
• a rotor body (5) comprising a laminated assembly of mutually electrically insulated annular plates of magnetic steel axially stacked with respect to an axis of rotation (6) of the rotor, and
• a plurality of permanent magnets (10) fixed with respect to said rotor body for defining magnetic poles of the rotor and having each a magnetic polarity direction being substantially perpendicular to said axis of rotation,
said rotor body comprising a plurality of longitudinal slots (8, 9) extending in parallel with said axis of rotation (6) and at a distance from a circumferential outer surface of the rotor body, said permanent magnets (10) being buried in said rotor body by being arranged in said slots (8, 9) in the form of a package (11) of two or more permanent magnets arranged in one layer side by side in the transversal and/or longitudinal direction of the slot with the permanent magnets arranged in the same slot having the same magnetic polarity direction being substantially perpendicular to said one layer formed by said package, layers (12, 13, 15, 20) of electrically insulating material separating on one hand said permanent magnets (10) of each said package with respect to each other and on the other outer surfaces of said permanent magnets package with respect to portions of said rotor body plates defining the respective slot, **characterized in that** it comprises layers (12, 13, 15, 20) of electrically insulating material separate from said permanent magnets in the form of sheets arranged between adjacent permanent magnets of a said package and between these permanent magnets and said portions of the rotor body plates defining the respective slot, and that it comprises at least one said sheet of electrically insulating material separate from said permanent magnets arranged in a said slot between said permanent magnets package and said portions of the rotor body plates and defining the respective slot while forming a tube-like electrically insulating structure (15) receiving said permanent magnets package.

2. A rotor according to claim 1, **characterized in that** said sheets (12, 13, 15) of electrically insulating material are made of flexible films of polyester, polyimide or other polymer, flexible papers of polyaromatic polyamide, flexible composite materials, such as laminations of the previous two material types, such as polyester-film/polyaromatic polyamide-paper laminate, or woven glass fabric coated with fluoropolymers.

3. A rotor according to claim 1 or 2, **characterized in that** said sheets are substantially rigid, such as in the form of a polymer-reinforced fibre glass laminate (20).

4. A rotor according to any of the preceding claims, **characterized in that** it comprises said permanent magnets packages having ≥ 2, especially ≥ 4, permanent magnets arranged side by side in the transversal direction of the respective slot.

5. A rotor according to any of the preceding claims, **characterized in that** it comprises said permanent magnets packages having 2-16, especially 4-10, permanent magnets arranged side by side in the longitudinal direction of the respective slot.

6. A rotor according to any of the preceding claims, **characterized in that** said layers (12, 13) of electrically insulating material comprise a material having a heat resistance so as to obtain a long term electrical insulation of adjacent permanent magnets in a said package and of said permanent magnets with respect to the rotor body plates for an operation temperature of said permanent magnets and rotor up to at least 200°C.

7. A rotor according to any of the preceding claims, **characterized in that** said layers (12, 13) of electrically insulating material are attached to said permanent magnets.

8. A rotor according to claim 7, **characterized in that** said layers (12, 13) of electrically insulating material are attached to said permanent magnets by adhesives, such as adhesive tapes, cyan-acrylate glues or epoxies.

9. A rotor according to claim 7 or 8, **characterized in that** said layers (12, 13) of electrically insulating material are made of woven fibre glass, polymer films, such as polyester and polyimide, glass reinforced polymer adhesive tapes, paper materials, such as polyaromatic polyamide or polyester non-woven materials, or non-organic materials, or combinations of these materials.

10. A rotor according to any of claims 7-9, **characterized in that** it comprises permanent magnets packages having permanent magnets arranged side by side in the transversal direction of the slot attached to each other as one rigid piece (14).

11. A rotor according to claim 10, **characterized in that** it comprises permanent magnets packages (11) having at least one said piece also including permanent magnets arranged side by side in the longitudinal direction of the slot.

12. A rotor according to claim 11, **characterized in that** said slots (9) are provided with grooves (16, 17) extending in the longitudinal direction of the slot in opposite walls (18, 19) of the slot each receiving a said sheet in the form of a rigid strip (20) separating permanent magnets of said package arranged side by side in the transversal direction of the slot.

13. A rotor according to any of the preceding claims, **characterized in that** at least said layers (13, 15) of electrically insulating material separating the outer surfaces of said permanent magnets package with respect to portions of said rotor body plates defining the respective slot are made of a material with mechanical resistance to abrasion.

14. A rotor according to claim 13, **characterized in that** said layers (13) of electrically insulating material separating said outer surfaces of said permanent magnets package with respect to portions of said rotor body plates defining the respective slot are made of a slippery, low friction material, such as glass fabric coated with fluoropolymers.

15. A track-bound vehicle electric machine comprising a stator (1) and a rotor (4) according to any of claims 1-14.

16. A track-bound vehicle having a driving arrangement for generating a traction force of the vehicle including at least one electric machine having a stator (1) and a rotor (4) according to any of claims 1-14.

## Patentansprüche

1. Rotor für eine Elektromaschine eines schienengebundenen Fahrzeugs, die dazu konfiguriert ist, eine Traktionskraft des Fahrzeugs zu erzeugen, wobei der Rotor umfasst:
- einen Rotorkörper (5), der eine laminierte Anordnung von zueinander elektrisch isolierten ringförmigen Platten aus magnetischem Stahl umfasst, die in Bezug auf eine Rotationsachse (6) des Rotors axial gestapelt sind und
- eine Mehrzahl von Permanentmagneten (10), die in Bezug auf den Rotorkörper befestigt sind, um Magnetpole des Rotors zu definieren und die jeweils eine magnetische Polaritätsrichtung aufweisen, die im Wesentlichen senkrecht zu der Drehachse verläuft,
wobei der Rotorkörper mehrere parallel zur Rotationsachse (6) verlaufende und im Abstand von einer umlaufenden Außenfläche des Rotorkörpers liegende Längsschlitze (8, 9) aufweist, wobei die Permanentmagnete (10) In den Rotorkörper eingebettet sind, indem sie in den Schlitzen (8, 9) in Form einer Packung (11) aus zwei oder mehr Permanentmagneten angeordnet sind, die in einer Schicht in der Querrichtung und/oder der Längsrichtung des Schlitzes nebeneinander angeordnet sind, wobei die Permanentmagnete, die in demselben Schlitz angeordnet sind und dieselbe magnetische Polaritätsrichtung aufweisen, im Wesentlichen senkrecht zu der einen Schicht angeordnet sind, die durch die Packung gebildet wird, wobei Schichten (12, 13, 15, 20) aus elektrisch isolierendem Material einerseits die Permanentmagnete (10) jedes Pakets voneinander trennen und andererseits Außenflächen des Permanentmagnetpakets von Abschnitten der Rotorkörperplatten trennen, welche den jeweiligen Schlitz definieren, **dadurch gekennzeichnet,**
**dass** er von den Permanentmagneten separate Schichten (12, 13, 15, 20) aus elektrisch isolierendem Material in Form von Blättern aufweist, die zwischen benachbarten Permanentmagneten der Packung und zwischen diesen Permanentmagneten und den Abschnitten der Rotorkörperplatten angeordnet sind, die den jeweiligen Schlitz definieren, und dass er mindestens ein solches von den Permanentmagneten separates Blatt aus elektrisch isolierendem Material aufweist, das in dem Schlitz zwischen dem Permanentmagnetpaket und den Abschnitten der Rotorkörperplatten angeordnet ist und den jeweiligen Schlitz definiert, während es eine rohrartige elektrisch isolierende Struktur (15) bildet, die das Permanentmagnetpaket aufnimmt.

2. Rotor nach Anspruch 1, **dadurch gekennzeichnet, dass** die Blätter (12, 13, 15) aus elektrisch isolierendem Material ausgebildet sind aus flexiblen Folien aus Polyester, Polyimid oder anderem Polymer, flexiblen Papieren aus polyaromatischem Polyamid, flexiblen Verbundwerkstoffen, wie Laminaten der vorherigen beiden Materialtypen, wie Polyesterfolie/Polyaromat-Polyamid-Papier-Laminat, oder gewebtem fluorpolymer-beschichtetem Glasgewebe.

3. Rotor nach Anspruch 1 oder 2, **dadurch gekennzeichnet, dass** die Blätter im Wesentlichen starr sind, beispielsweise in Form eines polymerverstärkten Glasfaserlaminats (20).

4. Rotor nach einem der vorangehenden Ansprüche, **dadurch gekennzeichnet, dass** er Permanentmagnetpakete mit ≥ 2, insbesondere ≥ 4, Permanentmagneten aufweist, die in Querrichtung des jeweiligen Schlitzes nebeneinander angeordnet sind.

5. Rotor nach einem der vorangehenden Ansprüche, **dadurch gekennzeichnet, dass** er Permanentmagnetpakete mit 2-16, insbesondere 4-10, Permanentmagneten aufweist, die in Längsrichtung des jeweiligen Schlitzes nebeneinander angeordnet sind.

6. Rotor nach einem der vorangehenden Ansprüche, **dadurch gekennzeichnet, dass** die Schichten (12, 13) aus elektrisch isolierendem Material ein Material mit einer derartigen Wärmebeständigkeit aufweisen, dass eine langfristige elektrische Isolierung benachbarter Permanentmagnete in einer solchen Packung und der Permanentmagnete in Bezug auf die Rotorkörperplatten für eine Betriebstemperatur der Permanentmagnete und des Rotors bis zu mindestens 200°C erreicht wird.

7. Rotor nach einem der vorhergehenden Ansprüche, **dadurch gekennzeichnet, dass** die Schichten (12, 13) aus elektrisch isolierendem Material an den Permanentmagneten befestigt sind.

8. Rotor nach Anspruch 7, **dadurch gekennzeichnet, dass** die Schichten (12, 13) aus elektrisch isolierendem Material an den Permanentmagneten durch Klebstoffe, wie Klebebänder, Cyan-Acrylat-Kleber oder Epoxide, befestigt sind.

9. Rotor nach Anspruch 7 oder 8, **dadurch gekennzeichnet, dass** die Schichten (12, 13) aus elektrisch isolierendem Material ausgebildet sind aus gewebten Glasfasern, Polymerfilmen wie Polyester und Polyimid, glasverstärkten Polymerklebebändern, Papiermaterialien wie polyaromatischen Polyamid- oder Polyester-Vliesstoffen oder nicht-organischen Materialien oder Kombinationen dieser Materialien.

10. Rotor nach einem der Ansprüche 7 bis 9, **dadurch gekennzeichnet, dass** er Permanentmagnetpakete umfasst, die Permanentmagnete aufweisen, die nebeneinander in der Querrichtung des Schlitzes angeordnet sind und die zu einem starren Stück (14) miteinander verbunden sind.

11. Rotor nach Anspruch 10, **dadurch gekennzeichnet, dass** er Permanentmagnetpakete (11) aufweist, von denen mindestens ein solches Stück auch Permanentmagnete aufweist, die in Längsrichtung des Schlitzes nebeneinander angeordnet sind.

12. Rotor nach Anspruch 11, **dadurch gekennzeichnet, dass** die Schlitze (9) mit in Längsrichtung des Schlitzes verlaufenden Nuten (16, 17) in gegenüberliegenden Wänden (18, 19) des Schlitzes versehen sind, die jeweils ein solches Blatt in der Form eines starren Streifens (20) aufnehmen, der Permanentmagnete des Pakets trennt, die in der Querrichtung des Schlitzes nebeneinander angeordnet sind.

13. Rotor nach einem der vorhergehenden Ansprüche, **dadurch gekennzeichnet, dass** mindestens die Schichten (13, 15) aus elektrisch isolierendem Material, welche die Außenflächen des Permanentmagnetpakets von den Abschnitten der Rotorkörperplatten trennen, welche den jeweiligen Schlitz definieren, aus einem Material mit mechanischer Abriebfestigkeit hergestellt sind.

14. Rotor nach Anspruch 13, **dadurch gekennzeichnet, dass** die Schichten (13) aus elektrisch isolierendem Material, welche die Außenflächen der Permanentmagnetpakete von den Abschnitten der Rotorkörperplatten trennen, welche den jeweiligen Schlitz definieren, aus einem rutschigen Material mit geringer Reibung hergestellt sind, wie Glasgewebe, das mit Fluorpolymeren beschichtet ist.

15. Elektromaschine für ein spurgebundenes Fahrzeug mit einem Stator (1) und einem Rotor (4) nach einem der Ansprüche 1 bis 14.

16. Spurgebundenes Fahrzeug mit einer Antriebsanordnung zur Erzeugung einer Traktionskraft des Fahrzeugs mit mindestens einer elektrischen Maschine mit einem Stator (1) und einem Rotor (4) nach einem der Ansprüche 1 bis 14.

## Revendications

1. Rotor pour machine électrique de véhicule sur rail, configuré pour générer une force de traction d'un dit véhicule, ledit rotor comprenant :
- un corps de rotor (5) comprenant un ensemble stratifié de plaques annulaires mutuellement électriquement isolées d'acier magnétique axialement empilées par rapport à un axe de rotation (6) du rotor, et
- une pluralité d'aimants permanents (10) fixes par rapport audit corps de rotor pour définir des pôles magnétiques du rotor et ayant chacun une direction de polarité magnétique étant sensiblement perpendiculaire audit axe de rotation,
ledit corps de rotor comprenant une pluralité de fentes longitudinales (8, 9) s'étendant en parallèle avec ledit axe de rotation (6) et à une distance d'une surface extérieure circonférentielle du corps de rotor, lesdits aimants permanents (10) étant incorporés dans ledit corps de rotor en étant agencés dans lesdites fentes (8, 9) sous la forme d'un bloc (11) de deux ou plusieurs aimants permanents agencés en une couche côte à côte dans la direction transversale et/ou longitudinale de la fente avec les aimants permanents agencés dans la même fente ayant la même direction de polarité magnétique étant sensiblement perpendiculaire à ladite une couche formée par ledit bloc, des couches (12, 13, 15, 20) de matériau électriquement isolant séparant d'une part lesdits aimants permanents (10) de chaque dit bloc les uns par rapport aux autres et d'autre part des surfaces extérieures dudit bloc d'aimants permanents par rapport à des portions desdites plaques de corps de rotor définissant la fente respective, **caractérisé en ce qu'**il comprend des couches (12, 13, 15, 20) de matériau électriquement isolant séparées desdits aimants permanents sous la forme de feuilles agencées entre des aimants permanents adjacents d'un dit bloc et entre ces aimants permanents et lesdites portions des plaques de corps de rotor définissant la fente respective, et qu'il comprend au moins une dite feuille de matériau électriquement isolant séparée desdits aimants permanents agencée dans une dite fente entre ledit bloc d'aimants permanents et lesdites portions des plaques de corps de rotor et définissant la fente respective tout en formant une structure électriquement isolante en forme de tube (15) recevant ledit bloc d'aimants permanents.

2. Rotor selon la revendication 1, **caractérisé en ce que** lesdites feuilles (12, 13, 15) de matériau électriquement isolant sont faites de films flexibles de polyester, de polyimide ou d'autre polymère, de papiers flexibles de polyamide polyaromatique, de matériaux composites flexibles, tels que des stratifications des deux types de matériau précédents, telles qu'un stratifié de film de polyester/de papier de polyamide polyaromatique, ou de tissu de verre textile enduit de fluoropolymères.

3. Rotor selon la revendication 1 ou 2, **caractérisé en ce que** lesdites feuilles sont sensiblement rigides, telles que sous la forme d'un stratifié de fibres de verre renforcé de polymère (20).

4. Rotor selon l'une quelconque des revendications précédentes, **caractérisé en ce qu'**il comprend lesdits blocs d'aimants permanents ayant ≥ 2, en particulier ≥ 4, aimants permanents agencés côte à côte dans la direction transversale de la fente respective.

5. Rotor selon l'une quelconque des revendications précédentes, **caractérisé en ce qu'**il comprend lesdits blocs d'aimants permanents ayant 2 à 16, en particulier 4 à 10, aimants permanents agencés côte à côte dans la direction longitudinale de la fente respective.

6. Rotor selon l'une quelconque des revendications précédentes, **caractérisé en ce que** lesdites couches (12, 13) de matériau électriquement isolant comprennent un matériau ayant une résistance à la chaleur afin d'obtenir une isolation électrique à long terme d'aimants permanents adjacents dans un dit bloc et desdits aimants permanents par rapport aux plaques de corps de rotor pour une température de fonctionnement desdits aimants permanents et rotor allant jusqu'au moins 200 °C.

7. Rotor selon l'une quelconque des revendications précédentes, **caractérisé en ce que** lesdites couches (12, 13) de matériau électriquement isolant sont fixées auxdits aimants permanents.

8. Rotor selon la revendication 7, **caractérisé en ce que** lesdites couches (12, 13) de matériau électriquement isolant sont fixées auxdits aimants permanents par adhésifs, tels que des rubans adhésifs, des colles cyano-acrylates ou des époxys.

9. Rotor selon la revendication 7 ou 8, **caractérisé en ce que** lesdites couches (12, 13) de matériau électriquement isolant sont faites de fibres de verre tissées, de films de polymère, tels que du polyester et du polyimide, de rubans adhésifs de polymère renforcé par fibres de verre, de matériaux de papier, tels que des matériaux non tissés de polyamide polyaromatique ou de polyester, ou de matériaux non organiques, ou d'associations de ces matériaux.

10. Rotor selon l'une quelconque des revendications 7 à 9, **caractérisé en ce qu'**il comprend des blocs d'aimants permanents ayant des aimants permanents agencés côte à côte dans la direction transversale de la fente fixés les uns aux autres comme une pièce rigide (14).

11. Rotor selon la revendication 10, **caractérisé en ce qu'**il comprend des blocs d'aimants permanents (11) ayant au moins une dite pièce incluant également des aimants permanents agencés côte à côte dans la direction longitudinale de la fente.

12. Rotor selon la revendication 11, **caractérisé en ce que** lesdites fentes (9) sont pourvues de rainures (16, 17) s'étendant dans la direction longitudinale de la fente dans des parois opposées (18, 19) de la fente recevant chacune une dite feuille sous la forme d'une bande rigide (20) séparant des aimants permanents dudit bloc agencés côte à côte dans la direction transversale de la fente.

13. Rotor selon l'une quelconque des revendications précédentes, **caractérisé en ce qu'**au moins lesdites couches (13, 15) de matériau électriquement isolant séparant les autres surfaces dudit bloc d'aimants permanents par rapport à des portions desdites plaques de corps de rotor définissant la fente respective sont faites d'un matériau avec une résistance mécanique à l'abrasion.

14. Rotor selon la revendication 13, **caractérisé en ce que** lesdites couches (13) de matériau électriquement isolant séparant lesdites surfaces extérieures dudit bloc d'aimants permanents par rapport à des portions desdites plaques de corps de rotor définissant la fente respective sont faites d'un matériau glissant à faible frottement, tel qu'un tissu de verre enduit de fluoropolymères.

15. Machine électrique de véhicule sur rail comprenant un stator (1) et un rotor (4) selon l'une quelconque des revendications 1 à 14.

16. Véhicule sur rail ayant un agencement d'entraînement pour générer une force de traction du véhicule incluant au moins une machine électrique ayant un stator (1) et un rotor (4) selon l'une quelconque des revendications 1 à 14.
